# EUROPEAN PATENT APPLICATION

(11) **EP 3 401 013 A1**
(43) Date of publication of application: **14.11.2018**
(21) Application number: 17382269.3
(22) Date of filing: 12.05.2017
(51) Int. Cl.: B01L 3/00

(54) **DEVICES AND METHODS FOR MULTIPLEXING LIQUID IN BIOSENSOR MICRO-CHAMBERS**

(71) Applicant: Universitat de Barcelona, 08028 Barcelona (ES); Scuola Superiore di Studi Universitari e di Perfezionamento Sant'Anna, 56127 Pisa (IT); Consejo Superior de Investigaciones Científicas (CSIC), 28006 Madrid (ES); Centro de Investigación Biomédica en Red, 28029 Madrid (ES)
(72) Inventor: SAVIOZZI, Giacomo, 56025 Pontedera (Pisa) (IT); SALVADOR VICO, Juan Pablo, 08034 Barcelona (ES); LÓPEZ DE MIGUEL, Manuel, 08028 Barcelona (ES); PALACIO BONET, Francisco, 08028 Barcelona (ES); PRUNA MORALES, Raquel, 08028 Barcelona (ES); MARCO COLÁS, M. Pilar, 08034 Barcelona (ES); LASCHI, Cecilia, 56025 Pontedera (Pisa) (IT)

(57) **Abstract**

A biosensor device for simultaneous multiple-analyte analysis by a plurality of biosensors dipped in single biosensor micro-chamber flooded with a functional liquid flowing to the biosensor micro-chambers from a fluidic circuit with no symmetry prerequisite comprising micro-valves operably associated to biosensor micro-chambers for selectively allowing the crossing of a functional liquid to the biosensor micro-chambers, a biosensor micro-chamber at a time, according to a pulsating flow mode so that the total flow rate can be greatly reduced and a predetermined amount of a pressured functional liquid is multiplexed to biosensor micro-chambers. Related methods are defined for such a biosensor device.

## Description

### TECHNICAL FIELD

The present invention relates to the field of continous flow biosensor devices, and to methods for supplying a functional liquid to biosensor micro-chambers in biosensor devices for multiple-analyte analysis.

### BACKGROUND ART

Continuous flow biosensors devices are known in which micro-fluidic systems are present through different liquids are automatically inserted in the biosensor micro-chamber. Flooding a biosensor micro-chamber with different liquids is a natural and necessary operation within the biosensors devices both to perform the biorecognition event and to wash/regenerate, i.e. to restore, the biosensor for subsequent analysis.

Document CN 204631053 discloses a micro-fluidic box for automatic biosensor analysis, wherein a body is provided with a plurality of sets of thermal measuring needles and a plurality of reagent micro-chambers.

Document KR 20140045852 relates to a device for injecting liquid selectively into a reaction chamber, composed of a microfluidic system comprising a plurality of injection paths through which liquid is injected and a plurality of flow paths connected with the injection paths correspondingly, and which is bonded to a reaction chamber; a connection path connected with the flow paths; a connection groove able to rotate, and which is selectively connected with one of the flow paths along the rotation based on the central axis; and a flow path selecting means equipped with an outlet which is connected with the connection groove and the reaction container so as to discharge liquids, which flows in through the selected flow path and the connection groove, into the reaction chamber.

The object of the aforementioned solutions is the automatic insertion, at a later stage, in the biosensor chamber of different liquids to carry out the required measurements or restoring operations.

Continuous flow multi-analyte biosensor cartridges are also known for the simultaneous measurement of biologically relevant analytes in a sample solution. In such biosensor applications a microfluidic system comprises a supply circuit and a plurality of flow paths connecting the supply circuit with the biosensor micro-chamber. The supply circuit is provided with a micro-pump. The microfluidic circuit must be adapted to flood the micro-chambers of parallel biosensors with a few hundred predefined micro-liters of the same compound/liquid in a predetermined time (low flow rate) and in identical amounts for each micro-chamber. The distribution of the liquid to the various micro-chambers is governed only by the geometry of the fluidic paths which are made symmetric with the highest degree of accuracy in order to assure that a same amount of liquid reaches each micro-chamber. Nevertheless, in such multi-analyte biosensor applications there is a problem that different amounts of the sample liquid enters the biosensor micro-chambers. Another problem of the above conventional continuous flow biosensor applications is that it is very difficult to supply the biosensor micro-chambers with a sufficiently precise low flow rate of liquid.

### SUMMARY OF INVENTION

It is an object of the present invention to propose a device and a method for simultaneous multiple-analyte analysis by biosensors dipped in biosensor micro-chambers which allow an identical amount of a functional liquid to flood a plurality of biosensor micro-chambers in a predetermined functional time period.

It is another object of the present invention to propose a method and a device for simultaneous multiple-analyte analysis by biosensors dipped in biosensor micro-chambers which supply a functional liquid to a plurality of biosensor micro-chambers in a predetermined functional time period being the amount of functional liquid supplied to each biosensor micro-chamber independently controlled.

It is another object of the present invention to propose a method and a device for supplying a functional liquid to biosensor micro-chambers in a biosensors device which flood at least one biosensor micro-chamber in a functional time period at an accurate very low flow rate by using the fluidic circuit.

An aspect of the present invention relates to the provision of a device for simultaneous multiple-analyte analysis by biosensors dipped in biosensor micro-chambers comprises: a feeding fluidic circuit with a pressured functional liquid supplied by a micro-pump; a plurality of biosensor micro-chambers each equipped with a biosensor; a plurality of injection paths, each of them connecting the feeding fluidic circuit to a respective single biosensor micro-chamber of the plurality of biosensor micro-chambers; at least one micro-valve associated to the injection paths for selectively allowing the crossing of the functional liquid to a single biosensor micro-chamber at a time; and an injection control unit operating the at least one micro-valve.

In a biosensors device for simultaneous multiple-analyte analysis as above outlined the flow of a same pressured functional liquid is selectively inlaid in the biosensor micro-chambers by one or more micro-valves controlled by an injection control unit so that the flow in each biosensor micro-chamber can be independently controlled with great accuracy.

Advantageously, the injection control unit operates the at least one micro-valve so that each biosensor micro chamber is flooded with the functional liquid according to a pulsating flow mode.

The above outlined device makes it possible to multiplex a functional liquid to a plurality of biosensor micro-chambers accordingly the pulsating flow mode. In fact, the biosensor micro-chambers are supplied one by one in a rapid succession of flow pulsations with the same pulsing functional liquid so that it is possible to supply within a functional time period each biosensor micro-chamber with an identical amount of functional liquid and the biosensor behaves as in the continuous flow mode with very low flow rate even though a pulsating flow is effectively entering the biosensor micro-chamber.

The fluidic circuit with a pressured functional liquid supplied by a micro-pump, and all its paths needed to feed one-by-one the biosensor micro-chambers, do not ask for any special geometrical symmetry overcoming the difficulties of current implementations to equally flood each biosensor micro-chambers.

Particular embodiments of the device of the invention are disclosed by the apparatus dependent claims.

Another aspect of the present invention relates to a method for supplying a functional liquid to biosensor micro-chambers in a device for analytes analysis by biosensors in which a biosensor is dipped in at least one biosensor micro-chamber flooded with a functional liquid supplied by a fluidic circuit and the functional liquid floods the biosensor micro-chamber for a functional time period, the functional liquid is pressured in the fluidic circuit and it is supplied to the biosensor micro-chamber according to a pulsating flow mode wherein the functional time period contains a plurality of flooding pulsations of the pulsing functional liquid.

The method of the invention allows to greatly reduce the total flow rate in a functional time period for a biosensor micro-chamber.

Particular embodiments of the method of the invention are disclosed by the method dependent claims.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention.

### BRIEF DESCRIPTION OF DRAWINGS

The constructional, functional features and the advantages of the device and method of the invention will be made clearer by the following detailed description, in which reference is made to the accompanying drawings which represent preferred and non-limiting embodiments thereof and in which:
FIG. 1 is a schematic view of a micro-fluidic system of a device according to the present invention.
FIG. 2 is a time chart of the operation of the device of FIG. 1 according to the method of the present invention. FTP = functional time period. FPCP = flooding pulsation cycle period. FPDT = flooding pulsation duration time.
FIG. 3 is a schematic view of an alternative layout of the micro-fluidic system of FIG.1.
FIG. 4 is a schematic view of a different embodiment of a micro-fluidic system of a device according to the present invention.

### DESCRIPTION OF EMBODIMENTS

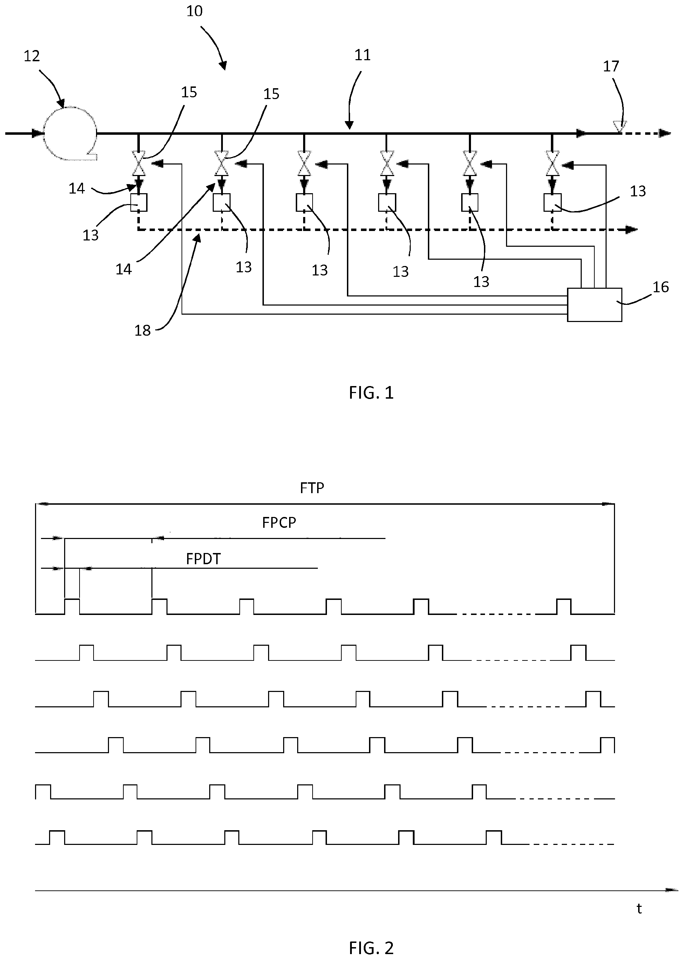

With reference first to FIG. 1, a device for simultaneous multiple-analyte analysis by biosensors dipped in biosensor micro-chambers comprises a fluidic system, 10, providing:
- a fluidic circuit, 11, with a pressured functional liquid, eventually carrying analytes, supplied by a micro-pump, 12;
- a relief valve, 17, operably associated to the fluidic circuit 11 to control the pressure of the functional liquid in the fluidic circuit and/or to discharge the functional liquid;
- a plurality of biosensor micro-chambers, 13, each equipped with a biosensor for revealing analytes present in a liquid compound which is one of a plurality of functional liquids;
- a plurality of injection paths, 14, each of them connecting the fluidic circuit 11 to a respective single biosensor micro-chamber 13;
- a plurality of micro-valves, 15, associated to the injection paths 14 for selectively allowing the crossing of the functional liquid to a single biosensor micro-chamber 13 at a time;
- a discharge fluidic circuit, 18, for receiving the functional liquid from the biosensor micro-chambers 13.

The device also comprises an injection control unit, 16, operating the micro-pump 12, the relief micro-valve 17 and the micro-valves 15 so that each biosensor micro chamber 13 is flooded with the functional liquid according to a pulsating flow mode.

The micro-valves 13 are active isolation micro-valves and the injection control unit 16 is adapted to control the isolation micro-valves switch on/off independently from one another.

The layout of the fluidic circuit 11 is such that a linear path is designed between the micro pump 12 and the relief valve 17 and the injection paths 14 are spaced along the linear path.

With reference to FIG. 2, an example of a pulsating flow mode is shown in a time chart in which the flow of the functional liquid into each of the six biosensor micro-chambers 13 of the device of FIG. 2 is shown as a function of time. Each biosensor micro-chamber is flooded with the functional liquid for a functional time period which can be an incubation, a detection period, a washing period, a regeneration period or any other specific functional period of the biosensors device. During a functional time period the micro-valve 15 operably associated to a specific biosensor micro chamber 13 is controlled by the injection control unit 16 to open a predefined amount of times, each time for a flooding pulsation time. In the embodiment of FIG. 2 the injection control unit is programmed to schedule opening times of each micro-valve 15 according to regular time intervals so that for each biosensor micro-chamber 13 a flooding pulsation duration time and a flooding pulsation cycle period are defined. Due to the fact that the fluidic circuit 11 is pressured, each time a micro-valve opens, the functional liquid flows through the injection path 14 into the associated biosensor micro-chamber 13 according to a steady flow rate so that the exact amount of functional liquid flowing in the biosensor micro-chamber 13 can be predetermined.

In the embodiment of FIG. 2, for each biosensor micro-chamber 13 a same flooding pulsation duration time and a same flooding pulsation cycle period are defined but the flooding pulsation times are subsequently offset of a flooding pulsation duration time and the flooding pulsation cycle period is defined as the sum of the flooding pulsation time periods of all the biosensor micro-chambers 13. With the above pulsating flow mode the crossing of the functional liquid is selectively allowed to a single biosensor micro-chamber 13 one-by-one and the micro-valves 15 are never all simultaneously closed, so that in a functional time period a same pulsing functional liquid is multiplexed to the plurality of biosensor micro-chambers 13. In the functional time period each biosensor micro-chamber 13 receive an identical amount of functional liquid.

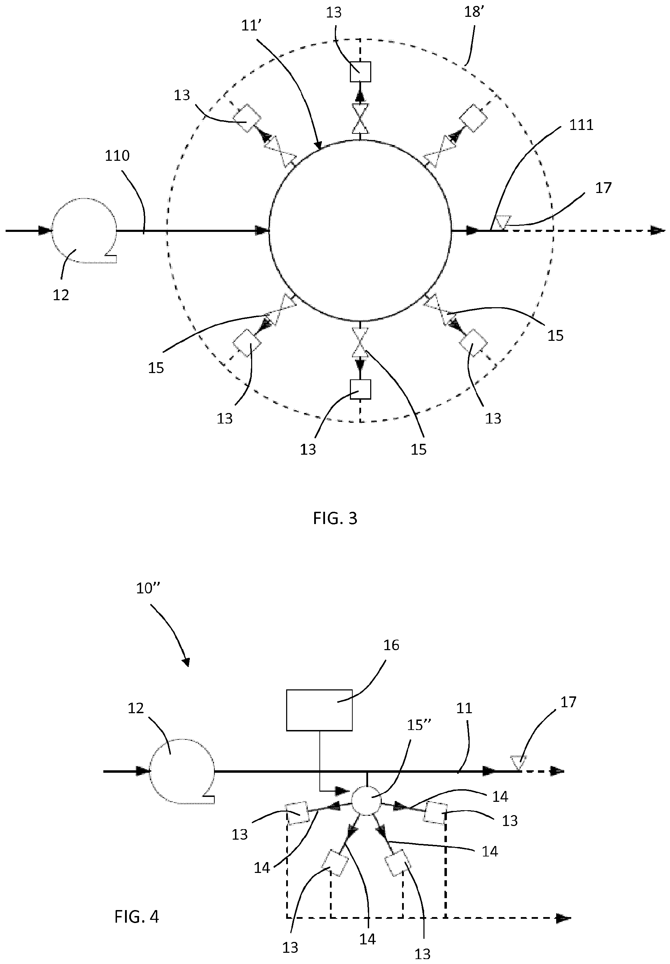

With reference to FIG. 3 a different layout of a fluidic circuit 11' is shown where injection paths 14' depart radially from a circular path of the fluidic circuit 11' symmetrically with respect to an inlet path, 110, and an outlet path, 111, of the fluidic circuit 11'. A circular discharge fluidic circuit 18' is arranged for receiving the functional liquid by the biosensor micro-chambers 13. Obviously, in the present invention, the symmetric position of the injection paths 14' is not a prerequisite for the device functioning.

Thanks to the presence of the micro-valves 15, the geometry of the fluidic circuit 11 and 11' do not affect the amount of functional liquid that flows in the biosensor micro-chambers 13.

With reference to FIG. 4, a different embodiment of a micro-fluidic system, 10", in a device according to the present invention provides a single rotary distribution micro-valve, 15", controlled by the injection control unit 16 for distributing the functional liquid to the injection paths 14 and then to the biosensor micro-chambers 13. The rotary distribution micro-valve 15" is adapted to allow the crossing of the functional liquid to the biosensor micro-chambers 13 one-by-one. Advantageously, the injection control unit 16 is programmable to define the interval rotary times of the rotary distribution micro-valve 15" so that a pulsating flow mode according to FIG. 2 is achieved.

In a specific embodiment of the device of the invention, a discharge micro-valve (not shown in figures) is interposed between each biosensor micro-chamber 13 and the discharge un-pressured fluidic circuit 18. The discharge micro-valve prevents the functional liquid from naturally flowing from biosensor micro-chambers 13 into the discharge fluidic circuit 18 so that the flow of the functional liquid in each biosensor micro-chamber 13 can be independently controlled by properly operating the respective biosensor micro-valve. The same discharge micro-valve can be operated to control the micro-fluidic circuit pressure and, consequently, the flow and its peak in the micro-chambers.

A method according to the present invention for supplying a functional liquid to biosensor micro-chambers in a device for analytes analysis by biosensors in which a biosensor is dipped in at least one biosensor micro-chamber flooded with a functional liquid supplied by a pressured fluidic circuit and the functional liquid floods the biosensor micro-chamber for a functional time period, provides that the functional liquid is supplied to the biosensor micro-chamber according to a pulsating flow mode wherein the functional time period contains a plurality of flooding pulsations of the pulsing functional liquid.

In a device for analytes analysis by biosensors with a single biosensor micro-chamber a method for supplying a functional liquid as above defined allow to supply the biosensor micro-chamber with a very low total amount of functional liquid in a functional time period. By properly setting a flooding pulsation duration time and a flooding pulsation cycle period the biosensor behaves as if it receives a continuous flow of functional liquid during the functional time period but the functional liquid is effectively supplied in a pulsating flow mode so that the total flow rate can be greatly reduced with respect to conventional continuous flow micro-fluidic systems of biosensors devices.

Advantageously, a method according to the invention is applied to a a biosensors device for simultaneous multiple-analyte analysis according to the present invention with a micro-fluidic system comprising:
- a fluidic circuit, 11, pressured with a functional liquid supplied by a micro-pump, 12;
- a relief (or discharge) micro-valve, 17, operably associated to the fluidic circuit 11;
- a plurality of biosensor micro-chambers, 13, each equipped with a biosensor for revealing analytes present in a sample liquid which is one of a plurality of functional liquids;
- a plurality of injection paths, 14, each of them connecting the fluidic circuit 11 to a respective single biosensor micro-chamber 13;
- a plurality of micro-valves, 15, associated to the injection paths 14 for selectively allowing the crossing of the functional liquid to a single biosensor micro-chamber 13 at a time;
- a discharge fluidic circuit, 18, for receiving the functional liquid from the biosensor micro-chambers 13.

In such a device, the method of the invention provides that a unique functional liquid is kept at a substantially steady pressure in the fluidic circuit 11 and the functional liquid is multiplexed to the plurality of biosensor micro-chambers 13 by allowing it to flow selectively from the pressured fluidic circuit 11 into the plurality of biosensor micro-chambers 13, a biosensor micro-chamber at a time.

In a preferred embodiment of the method of the present invention the functional liquid is multiplexed in a rapidly timed sequence of flooding pulsations in which, for each biosensor micro-chamber 13 are defined a same flooding pulsation duration time and a same flooding pulsation cycle period so that each biosensor micro-chamber 13 receives the same volume of the functional liquid in a functional time period.

In an alternative embodiment of the method of the present invention a flooding pulsation duration time and a flooding pulsation cycle period are independently defined for each biosensor micro-chamber 13 so that each biosensor micro-chamber 13 receives its own volume of the functional liquid in a biosensor functional time period.

The above embodiment is preferable where the biosensors of multiple biosensor micro-chambers 13 work at their best when they receive the functional liquid with a different flow rate.

In a further alternative embodiment of the method of the invention at least one biosensor micro-chamber 13 of the plurality of biosensor micro-chambers receives a single flooding pulsation of the functional liquid during the functional time period, for instance in case a biosensor works at his best when the biosensor micro-chamber is only initially flooded with functional liquid which is then kept motionless in the micro-chamber.

Although the invention has been described above with particular reference to some specific embodiments, numerous modifications and variations will be apparent to a person skilled in the art in view of the above description. The present invention intends, therefore, to embrace all the embodiments that fall within the ambit of protection defined by the following claims.

## Claims

1. A device for simultaneous multiple-analyte analysis by biosensors dipped in biosensor micro-chambers comprising:
- a fluidic circuit with a pressured functional liquid supplied by a micro-pump;
- a plurality of biosensor micro-chambers each equipped with a biosensor;
- a plurality of injection paths, each of them connecting the fluidic circuit to a respective single biosensor micro-chamber of the plurality of biosensor micro-chambers;
- at least one micro-valve associated to the injection paths for selectively allowing the crossing of the functional liquid to a single biosensor micro-chamber at a time; and
- an injection control unit operating the at least one micro-valve.

2. The device according to claim 1, wherein the injection control unit operates the at least one micro-valve so that each biosensor micro-chamber is flooded with the functional liquid according to a pulsating flow mode.

3. The device according to any one of claims 1-2, wherein the at least one micro-valve is a plurality of isolation micro-valves, an isolation micro-valve for each injection path, the injection control unit being adapted to control the isolation micro-valves switch on/off.

4. The device according to claim 3, wherein the injection control unit is programmable to schedule opening times of each biosensor micro-valve, so that for each biosensor micro-chamber a flooding pulsation duration time and a flooding pulsation cycle period are defined.

5. The device according to any one of claims 1-2, wherein the at least one micro-valve is a rotary distribution micro-valve controlled by the injection control unit.

6. The device according to claim 5, wherein the injection control unit is programmable to define the interval rotary times of the rotary distribution micro-valve.

7. The device according to any one of the preceding claims, wherein the fluidic circuit is provided with a relief valve to control the pressure of the functional liquid in the fluidic circuit and/or to discharge the functional liquid.

8. The device according to any one of the preceding claims, further comprising a discharge fluidic circuit for receiving the functional liquid from the biosensor micro-chambers, a discharge micro-valve being interposed between each biosensor micro-chamber and the discharge fluidic circuit.

9. A method for supplying a functional liquid to biosensor micro-chambers in a device for analytes analysis by biosensors in which a biosensor is dipped in at least one biosensor micro-chamber flooded with a functional liquid supplied by a fluidic circuit and the functional liquid floods the biosensor micro-chamber for a functional time period, **characterized in that** the functional liquid is supplied to the biosensor micro-chamber according to a pulsating flow mode wherein the functional time period contains a plurality of flooding pulsations of the pulsing functional liquid.

10. The method according to claim 9, wherein a unique functional liquid is supplied to a plurality of biosensor micro-chambers of a biosensors device for simultaneous multiple-analyte analysis, wherein the unique functional liquid is kept at a substantially steady pressure in the fluidic circuit and the functional liquid is multiplexed by allowing it to flow selectively from the fluidic circuit into the plurality of biosensor micro-chambers, a biosensor micro-chamber at a time.

11. The method according to claim 10, wherein the functional liquid is multiplexed in a rapidly timed sequence to obtain the flooding pulsations.

12. The method according to claim 11, wherein for each biosensor micro-chamber the same flooding pulsation duration time and the same flooding pulsation cycle period are defined, so that each biosensor micro-chamber receives the same volume of the functional liquid in the functional time period.

13. The method according to claim 11, wherein a flooding pulsation duration time and a flooding pulsation cycle period are independently defined for each biosensor micro-chamber, so that each biosensor micro-chamber receives its own volume of the functional liquid in the functional time period.

14. The method according to claim 13, wherein at least one biosensor micro-chamber of the plurality of biosensor micro-chambers receives a single flooding pulsation of the functional liquid during the functional time period.
